# EUROPÄISCHE PATENTANMELDUNG

(11) **EP 4 760 228 A1**
(43) Veröffentlichungstag der Anmeldung: **17.06.2026**
(21) Anmeldenummer: 25197240.2
(22) Anmeldetag: 21.08.2025
(51) Int. Cl.: G01M 11/08, G01M 17/007, G01S 7/40, G01S 7/497

(54) **SYSTEM UND VERFAHREN ZUM TESTEN EINES FAHRZEUGUMFELDSENSORS UND ZUM EINSTELLEN WENIGSTENS EINES FAHRZEUGSCHEINWERFERS EINES KRAFTFAHRZEUGS**

(30) Priorität: 10.12.2024 DE 202024107158 U
(71) Anmelder: Rohde & Schwarz GmbH & Co. KG, 81671 München (DE)
(72) Erfinder: BEER, Matthias, 81671 München (DE)
(74) Vertreter: Prinz & Partner mbB

(57) **Zusammenfassung**

Die Erfindung betrifft ein System (10) zum Testen eines Fahrzeugumfeldsensors und zum Einstellen wenigstens eines Fahrzeugscheinwerfers eines Kraftfahrzeugs. Das System (10) umfasst eine Basis (12), wenigstens ein Scheinwerfereinstellgerät (22) und wenigstens ein Testgerät (24). Die Basis (12) definiert eine horizontale Basisebene (BE). Das wenigstens eine Scheinwerfereinstellgerät (22) ist zum Einstellen von wenigstens einem Fahrzeugscheinwerfer eingerichtet. Das wenigstens eine Testgerät (24) ist zum Testen eines Fahrzeugumfeldsensors eingerichtet. Ferner ist ein Verfahren zum Testen eines Fahrzeugumfeldsensors und zum Einstellen wenigstens eines Fahrzeugscheinwerfers eines Kraftfahrzeugs beschrieben.

## Beschreibung

Die Erfindung betrifft ein System zum Testen eines Fahrzeugumfeldsensors und zum Einstellen wenigstens eines Fahrzeugscheinwerfers eines Kraftfahrzeugs. Ferner betrifft die Erfindung ein Verfahren zum Testen eines Fahrzeugumfeldsensors und zum Einstellen wenigstens eines Fahrzeugscheinwerfers eines Kraftfahrzeugs.

Heutzutage weisen Kraftfahrzeuge mehrere Fahrerassistenzsysteme auf, beispielsweise Abstandswarner, Abstandshalter, Bremsassistenten, Spurhalteassistenten, Spurwechselassistenten usw., die einen Fahrzeugführer des Kraftfahrzeugs unterstützen oder gewisse Aufgaben sogar vollständig übernehmen sollen. Die Fahrerassistenzsysteme umfassen daher typischerweise wenigstens einen Fahrzeugumfeldsensor, beispielsweise einen Radarsensor zur Abstandsmessung bzw. Umfeldüberwachung und/oder eine Kamera zum optischen Überwachen der Umgebung des Kraftfahrzeugs.

In Abhängigkeit der verwendeten Fahrzeugumfeldsensoren müssen diese nach dem Einbau in das Kraftfahrzeug eingestellt bzw. getestet werden, wozu ein Testgerät verwendet wird. Auch eine Kalibrierung des Fahrzeugumfeldsensors kann notwendig sein.

Darüber hinaus weisen Kraftfahrzeuge an ihrer Front Fahrzeugscheinwerfer auf, die eingestellt werden müssen, wozu ein Scheinwerfereinstellgerät verwendet wird. Hierbei handelt es sich typischerweise um ein separates Gerät. Um die Arbeitsabläufe in der Werkstatt zu vereinfachen und zu beschleunigen, ist es bekannt, das Testgerät und das Scheinwerfereinstellgerät gemeinsam an einer Halterung zu fixieren, wodurch der in einer Werkstatt zur Verfügung stehende Platz effektiver genutzt werden kann.

Aus dem Stand der Technik, beispielsweise der EP 3 736 555 A1, sind hierzu Systeme bekannt, die auch als Kalibrierhilfsmittel ("Kalibriertool") bezeichnet werden. Als nachteilig bei dem aus dem Stand der Technik bekannten System hat sich jedoch herausgestellt, dass dieses weniger flexibel einsetzbar ist bzw. Probleme bei der Stabilität auftreten, die unter anderem mit dem unterschiedlichen Gewicht der verwendeten Geräte zum Testen des Fahrzeugumfeldsensors und zum Einstellen des Fahrzeugscheinwerfers einhergehen.

Die Aufgabe der Erfindung ist es daher, ein verbessertes System bereitzustellen, mit dem die zuvor genannten Probleme zumindest teilweise behoben werden.

Die Aufgabe wird unter anderem erfindungsgemäß gelöst durch ein System zum Testen eines Fahrzeugumfeldsensors und zum Einstellen wenigstens eines Fahrzeugscheinwerfers eines Kraftfahrzeugs. Das System umfasst eine Basis, wenigstens ein Scheinwerfereinstellgerät und wenigstens ein Testgerät. Die Basis definiert eine horizontale Basisebene. Das wenigstens eine Scheinwerfereinstellgerät ist zum Einstellen von wenigstens einem Fahrzeugscheinwerfer eingerichtet. Das wenigstens eine Testgerät ist zum Testen eines Fahrzeugumfeldsensors eingerichtet.

Das wenigstens eine Scheinwerfereinstellgerät ist in einer Scheinwerfereinstellgerät-Ebene angeordnet, die parallel zur Basisebene ist. Das wenigstens eine Testgerät ist in einer Testgerät-Ebene angeordnet, die parallel zur Basisebene, aber unterschiedlich zur Scheinwerfereinstellgerät-Ebene ist. Alternativ oder ergänzend sind das wenigstens eine Scheinwerfereinstellgerät und das wenigstens eine Testgerät in einem gemeinsamen Gehäuse angeordnet.

Insbesondere befinden sich das Testgerät in der Testgerät-Ebene und das Scheinwerfereinstellgerät in der Scheinwerfereinstellgerät-Ebene in einem Betriebszustand des Systems, in dem das Kraftfahrzeug getestet wird, also der Fahrzeugumfeldsensor getestet und der Fahrzeugscheinwerfer eingestellt wird. Mit dem System ist sichergestellt, dass Kraftfahrzeuge effizient und zuverlässig getestet werden können, bei denen der Fahrzeugscheinwerfer und der Fahrzeugumfeldsensor nicht in einer Ebene liegen, sondern in zumindest zwei unterschiedlichen Ebenen.

Grundsätzlich kann es sich bei dem Testgerät um ein Gerät handeln, das eingerichtet ist, ein Objekt für den Fahrzeugumfeldsensor des Kraftfahrzeugs simuliert, beispielsweise in einem bestimmten Abstand. Das simulierte Objekt kann als stationäres Objekt oder als bewegtes Objekt simuliert werden. Insofern kann mithilfe des Testgeräts eine Geschwindigkeit und/oder Beschleunigung des Objekts simuliert werden. Auch kann die Größe des Objekts entsprechend von dem Testgerät simuliert werden. Mithilfe des simulierten Objekts kann der Fahrzeugumfeldsensor des Kraftfahrzeugs getestet werden, indem beispielsweise ausgewertet wird, ob der Fahrzeugumfeldsensor des Kraftfahrzeugs das simulierte Objekt richtig erkannt hat. Hierzu kann ein weiteres Analysegerät verwendet werden, mit dem das Testergebnis ermittelt wird. Zur Analyse kann das Analysegerät mit dem Testgerät und dem Kraftfahrzeug, insbesondere dem Fahrzeugumfeldsensor, gekoppelt sein, um die Daten auszulesen und miteinander abzugleichen.

Sofern das wenigstens eine Scheinwerfereinstellgerät und das wenigstens eine Testgerät in einem gemeinsamen Gehäuse angeordnet sind, ergibt sich nur ein einzelnes Kombinationsgerät, in dem sowohl das Scheinwerfereinstellgerät als auch das Testgerät untergebracht sind. Beide Geräte können über das gemeinsame Gehäuse direkt mit der Säule gekoppelt sein. Ebenso kann ein Träger vorgesehen sein, über den beide Geräte über das gemeinsame Gehäuse indirekt mit der Säule gekoppelt sind. In dem Fall sind beide Geräte aber auf einer Seite in Bezug zur Säule angeordnet. Insofern kann ein Gegengewicht vorgesehen sein, um die Stabilität des Systems zu gewährleisten. Das Scheinwerfereinstellgerät und das Testgerät können dabei innerhalb des einzelnen Kombinationsgeräts übereinander angeordnet sein, wodurch sie in parallelen, aber unterschiedlichen Ebenen angeordnet sind. Es ist aber auch denkbar, dass das Scheinwerfereinstellgerät und das Testgerät nebeneinander angeordnet sind, sodass sie in einer gemeinsamen Ebene angeordnet sind, die auch als Geräteebene bezeichnet wird.

Ein Aspekt sieht vor, dass sich eine Säule von der Basis ausgehend in vertikaler Richtung erstreckt, wobei mit der Säule ein erster Träger für das wenigstens eine Scheinwerfereinstellgerät gekoppelt ist, und wobei mit der Säule ein zweiter Träger für das wenigstens eine Testgerät gekoppelt ist. Die beiden Geräte, also das wenigstens eine Scheinwerfereinstellgerät und das wenigstens eine Testgerät sind demnach an zwei unterschiedlichen Trägern angeordnet, die daher auch als Scheinwerfereinstellgerät-Träger (erster Träger) bzw. Testgerät-Träger (zweiter Träger) bezeichnet werden können. Die beiden Träger sind in unterschiedlichen Ebenen mit der Säule gekoppelt, also in unterschiedlicher Höhe (vertikaler Position), wodurch gewährleistet ist, dass das Scheinwerfereinstellgerät in der Scheinwerfereinstellgerät-Ebene angeordnet ist und das Testgerät in der Testgerät-Ebene angeordnet ist, wobei die beiden Ebenen unterschiedlich sind.

Insbesondere sind der erste Träger und der zweite Träger an zwei entgegengesetzten Seiten der Säule angeordnet. Hierdurch ergibt sich ein kompakter und stabiler Aufbau, da die Säule zentral angeordnet ist, insbesondere in Bezug auf die Basis. Die beiden Träger, die aufgrund des Gewichts der entsprechenden Geräte, Hebel darstellen, greifen demnach an entgegengesetzten Seiten der Säule an, was sich positiv auf die Stabilität auswirkt.

Die beiden Träger können unterschiedlich lang sein und/oder das jeweilige Gerät kann in einem unterschiedlichen Abstand von der Säule entfernt auf dem Träger angeordnet sein, wodurch sich unterschiedliche Hebelverhältnisse einstellen lassen. Insbesondere wird die Position des jeweiligen Geräts und/oder die Länge des entsprechenden Trägers derart gewählt, dass an der Säule im Wesentlichen gleich große Hebelkräfte anliegen, um einen stabilen Aufbau zu gewährleisten.

Ferner kann vorgesehen sein, dass der erste Träger und/oder der zweite Träger verschiebbar in Bezug auf die Säule mit der Säule gekoppelt sind bzw. ist. Hierdurch ist es möglich, das Scheinwerfereinstellgerät (über den ersten Träger) und/oder das Testgerät (über den zweiten Träger) in eine gewünschte Höhe zu bringen, um die Position flexibel an die Bedürfnisse des jeweiligen Kraftfahrzeugs anzupassen. Insofern ist das System an verschiedene Kraftfahrzeuge anpassbar und daher flexibel einsetzbar.

Gemäß einer Ausführungsform ist vorgesehen, dass sich der erste Träger und/oder der zweite Träger in horizontaler Richtung erstrecken bzw. erstreckt. Beide Träger können somit im rechten Winkel zur Säule verlaufen. Es kann aber auch nur einer von beiden Trägern senkrecht in Bezug auf die Erstreckungsrichtung der Säule verlaufen. Sofern beide Träger senkrecht von der Säule abstehen, sind die beiden Träger an unterschiedlichen vertikalen Positionen mit der Säule gekoppelt, also in unterschiedlicher Höhe.

Eine weitere Ausführungsform sieht vor, dass der erste Träger und/oder der zweite Träger unter einem von 90° unterschiedlichen Winkel von der Säule abstehen bzw. absteht. Insofern können die Träger oder zumindest einer der Träger auch schräg von der Säule abstehen, also nicht senkrecht zur Erstreckungsrichtung der Säule.

Grundsätzlich kann auch vorgesehen, dass ein Träger senkrecht von der Säule absteht, wohingegen der andere Träger unter einem von 90° unterschiedlichen Winkel von der Säule absteht, also schräg oder geneigt. In dem Fall können beide Träger auch in der gleichen vertikalen Position, also in der gleichen Höhe, mit der Säule gekoppelt sein, da sich die unterschiedlichen Ebenen für das Testgerät und das Scheinwerfereinstellgerät dann aufgrund der unterschiedlichen Orientierungen der Träger ergeben. Selbstverständlich können die Träger aber auch an unterschiedlichen vertikalen Positionen mit der Säule gekoppelt sein.

Beispielsweise schließen bzw. schließt der erste Träger und/oder der zweite Träger einen Winkel zwischen 10° und 80° zwischen sich und der Säule ein. Wie vorstehend erläutert, liegt also ein von 90° unterschiedlicher Winkel vor. Mit anderen Worten erstreckt sich der jeweilige Träger nicht in einer im Wesentlichen senkrechten Richtung von der Säule weg bzw. ist nicht im Wesentlichen horizontal verlaufend.

Gemäß einer weiteren Ausführungsform ist vorgesehen, dass das wenigstens eine Scheinwerfereinstellgerät und das wenigstens eine Testgerät übereinander gestapelt sind. Beide Geräte sind somit übereinander angeordnet, wodurch sie sich in den unterschiedlichen Ebenen befinden. Sofern beide Geräte an einem (gemeinsamen) Träger angeordnet sind, der von der Säule absteht, kann ein Gegengewicht für die Geräte vorgesehen sein.

Ferner kann sich eine Säule von der Basis ausgehend in vertikaler Richtung erstrecken. Das wenigstens eine Scheinwerfereinstellgerät und/oder das wenigstens eine Testgerät sind bzw. ist direkt mit der Säule gekoppelt.

Ferner kann die Aufgabe erfindungsgemäß gelöst werden durch ein System zum Testen eines Fahrzeugumfeldsensors und zum Einstellen wenigstens eines Fahrzeugscheinwerfers eines Kraftfahrzeugs. Das System umfasst eine Basis, wenigstens ein Scheinwerfereinstellgerät und wenigstens ein Testgerät. Die Basis definiert eine horizontale Basisebene. Das wenigstens eine Scheinwerfereinstellgerät ist zum Einstellen von wenigstens einem Fahrzeugscheinwerfer eingerichtet. Das wenigstens eine Testgerät ist zum Testen eines Fahrzeugumfeldsensors eingerichtet. Eine Säule erstreckt sich von der Basis ausgehend in vertikaler Richtung. Das wenigstens eine Scheinwerfereinstellgerät und/oder das wenigstens eine Testgerät sind bzw. ist direkt mit der Säule gekoppelt.

Hierdurch ergibt sich ein kompakter und stabiler Aufbau des gesamten Systems, da die Anzahl der Träger zumindest reduziert werden kann. Sofern beide Geräte direkt mit der Säule gekoppelt sind, kann sogar auf (Quer-)Träger vollständig verzichtet werden.

Die Geräte können an den Seiten Koppelschnittstellen aufweisen, über die die Geräte direkt mit der Säule gekoppelt werden können, die hierzu Gegenkoppelschnittstellen aufweist. Beispielsweise sind in der Säule Nuten oder Rastlöcher vorgesehen, über die die Geräte mit der Säule direkt gekoppelt werden können, also ohne Träger.

Insbesondere ist vorgesehen, dass das wenigstens eine Scheinwerfereinstellgerät und/oder das wenigstens eine Testgerät verschiebbar mit der Säule gekoppelt sind. Hierdurch lässt sich das System an unterschiedliche Kraftfahrzeuge anpassen, indem das wenigstens eine Scheinwerfereinstellgerät und/oder das wenigstens eine Testgerät entsprechend verschoben wird, insbesondere in eine bestimmte Höhe. Die Geräte können entlang der Säule verschiebbar geführt sein, sodass sich ihre jeweilige vertikale Position einstellen lässt, also die Höhe. Beispielsweise sind die Geräte in Nuten verschiebbar aufgenommen, die in der Säule vorgesehen sind, wobei an einer gewünschten Position entlang der Nut das Gerät fixiert werden kann.

Grundsätzlich kann das jeweilige Gerät mechanisch mit der Säule gekoppelt bzw. in der entsprechenden Position fixiert werden. Es kann ein federvorgespanntes Element vorgesehen sein, das mit der Säule interagiert. Ebenso kann eine (elektro-)magnetische Befestigung/Fixierung für das jeweilige Gerät vorgesehen sein.

Eine Säule kann sich von der Basis ausgehend unter einem Winkel zwischen 15° und 75° erstrecken. Das wenigstens eine Scheinwerfereinstellgerät und das wenigstens eine Testgerät sind beide zumindest indirekt mit der Säule gekoppelt. Durch die Neigung der Säule, also der Abweichung zu einer im Wesentlichen vertikalen Ausrichtung der Säule, kann sichergestellt werden, dass die aufgrund des Gewichts der Geräte ausgeübten Kräfte besser über die Säule an die Basis weitergeleitet werden, insbesondere die Hebelkräfte. Auch kann aufgrund der geneigten Orientierung der Säule auf unterschiedliche Größen der Geräte reagiert werden.

Darüber hinaus kann die Aufgabe erfindungsgemäß gelöst werden durch ein System zum Testen eines Fahrzeugumfeldsensors und zum Einstellen wenigstens eines Fahrzeugscheinwerfers eines Kraftfahrzeugs. Das System umfasst eine Basis, wenigstens ein Scheinwerfereinstellgerät und wenigstens ein Testgerät. Die Basis definiert eine horizontale Basisebene. Das wenigstens eine Scheinwerfereinstellgerät ist zum Einstellen von wenigstens einem Fahrzeugscheinwerfer eingerichtet. Das wenigstens eine Testgerät ist zum Testen eines Fahrzeugumfeldsensors eingerichtet. Eine Säule erstreckt sich von der Basis ausgehend unter einem Winkel zwischen 15° und 75°. Das wenigstens eine Scheinwerfereinstellgerät und das wenigstens eine Testgerät sind beide zumindest indirekt mit der Säule gekoppelt. Durch die Neigung der Säule, also der Abweichung zu einer im Wesentlichen vertikalen Ausrichtung der Säule, kann sichergestellt werden, dass die aufgrund des Gewichts der Geräte ausgeübten Kräfte besser über die Säule an die Basis weitergeleitet werden, insbesondere die Hebelkräfte. Auch kann aufgrund der geneigten Orientierung der Säule auf unterschiedliche Größen der Geräte reagiert werden.

Ein Aspekt sieht vor, dass sich zwei Säulen von der Basis ausgehend unter einem Winkel zwischen 15° und 75° erstrecken, wobei die beiden Säulen miteinander verbunden sind, um einen Tragrahmen auszubilden. Der Tragrahmen gewährleistet die gewünschte Stabilität für die Geräte, wodurch das gesamte System entsprechend stabiler ist als bei einer einzelnen Säule.

Insbesondere sind die beiden Säulen an ihrem von der Basis wegweisenden Ende miteinander verbunden. Demnach haben die Säulen keine freien Enden, da jede der Säulen mit ihrem ersten Ende mit der Basis und mit ihrem zweiten Ende mit der anderen Säule verbunden ist. Die Stabilität des Tragrahmens wird hierdurch verbessert.

Das wenigstens eine Scheinwerfereinstellgerät und das wenigstens eine Testgerät können beide über einen horizontal verlaufenden Träger mit der Säule verbunden sein. Insgesamt kann mittels der geneigt verlaufenden Säule und des horizontal verlaufenden Trägers eine Fachwerksanordnung hergestellt werden.

Auch können das wenigstens eine Scheinwerfereinstellgerät und das wenigstens eine Testgerät beide in einer gemeinsamen Geräteebene angeordnet sein, die parallel zur Basisebene ist. In dieser Ausgestaltung ist aufgrund der unterschiedlichen Anordnung der Säule eine höhere Stabilität im Vergleich zum Stand der Technik gewährleistet.

Die Aufgabe wird zudem gelöst durch ein System zum Testen eines Fahrzeugumfeldsensors und zum Einstellen wenigstens eines Fahrzeugscheinwerfers eines Kraftfahrzeugs. Das System umfasst eine Basis, wenigstens ein Scheinwerfereinstellgerät und wenigstens ein Testgerät. Die Basis definiert eine horizontale Basisebene. Das wenigstens eine Scheinwerfereinstellgerät ist zum Einstellen von wenigstens einem Fahrzeugscheinwerfer eingerichtet. Das wenigstens eine Testgerät ist zum Testen eines Fahrzeugumfeldsensors eingerichtet. Das wenigstens eine Scheinwerfereinstellgerät und das wenigstens eine Testgerät sind in einem gemeinsamen Gehäuse angeordnet. Insofern ergibt sich nur ein einzelnes Kombinationsgerät, in dem sowohl das Scheinwerfereinstellgerät als auch das Testgerät untergebracht sind. Beide Geräte können über das gemeinsame Gehäuse direkt mit der Säule gekoppelt sein. Ebenso kann ein Träger vorgesehen sein, über den beide Geräte über das gemeinsame Gehäuse indirekt mit der Säule gekoppelt sind. In dem Fall sind beide Geräte aber auf einer Seite in Bezug zur Säule angeordnet. Insofern kann ein Gegengewicht vorgesehen sein, um die Stabilität des Systems zu gewährleisten.

Es kann ferner vorgesehen sein, dass an der Basis mehrere Rollen vorgesehen sind. Hierdurch lassen sich die Geräte an eine gewünschte Position in Bezug auf das zu testende Kraftfahrzeug verfahren.

Alternativ kann vorgesehen sein, dass wenigstens ein Roboterarm vorgesehen ist, wobei der Roboterarm mit der Basis gekoppelt ist. der Roboterarm kann die Basis und damit die Geräte verstellen, um diese entsprechend zu positionieren.

Ein weiterer Aspekt sieht vor, dass das wenigstens eine Testgerät ein Radar-Testgerät und/oder ein Lidar-Testgerät aufweist. Es können also auch zwei Testgeräte vorgesehen sein, nämlich ein Radar-Testgerät und ein Lidar-Testgerät. Hiermit lassen sich Radar-Sensoren und Lidar-Sensoren eines Kraftfahrzeugs testen.

Neben dem Testen des Fahrzeugumfeldsensors kann auch vorgesehen sein, dass das wenigstens eine Testgerät eingerichtet ist, den Fahrzeugumfeldsensor zu kalibrieren. Eine Kalibrierung ist insbesondere dann notwendig, wenn dieser gewechselt oder erstmalig eingebaut worden ist und noch keine Kalibrierung stattgefunden hat.

Ferner wird die Aufgabe erfindungsgemäß gelöst durch ein Verfahren zum Testen eines Fahrzeugumfeldsensors und zum Einstellen wenigstens eines Fahrzeugscheinwerfers eines Kraftfahrzeugs, wobei das Verfahren die Schritte umfasst:
- Bereitstellen eines Systems der zuvor genannten Art,
- Positionieren des Systems in Bezug auf das Kraftfahrzeug,
- Verwenden des wenigstens einen Testgeräts, um den Fahrzeugumfeldsensor des Kraftfahrzeugs zu testen, und
- Verwenden des wenigstens einen Scheinwerfereinstellgeräts, wenigstens einen Fahrzeugscheinwerfer des Kraftfahrzeugs einzustellen.

Mit dem Verfahren kann das Kraftfahrzeug also getestet werden, insbesondere der Fahrzeugumfeldsensor des Kraftfahrzeugs getestet und der Fahrzeugscheinwerfer des Kraftfahrzeugs eingestellt werden. Sofern gewünscht kann auch eine Kalibrierung des Fahrzeugumfeldsensors erfolgen.

Generell stehen das Scheinwerfereinstellgerät und das Testgerät miteinander in einer geometrischen Beziehung, die definiert ist, wobei diese flexibel an unterschiedliche Kraftfahrzeuge anpassbar sein kann.

Weitere Vorteilte und Eigenschaften der Erfindung ergeben sich aus der nachfolgenden Beschreibung und den Zeichnungen, auf die Bezug genommen wird. In den Zeichnungen zeigen:
- Figur 1 eine erste exemplarische Ausführungsform eines Systems zum Testen eines Fahrzeugumfeldsensors und zum Einstellen wenigstens eines Fahrzeugscheinwerfers eines Kraftfahrzeugs,
- Figur 2 eine zweite exemplarische Ausführungsform eines Systems zum Testen eines Fahrzeugumfeldsensors und zum Einstellen wenigstens eines Fahrzeugscheinwerfers eines Kraftfahrzeugs,
- Figur 3 eine dritte exemplarische Ausführungsform eines Systems zum Testen eines Fahrzeugumfeldsensors und zum Einstellen wenigstens eines Fahrzeugscheinwerfers eines Kraftfahrzeugs,
- Figur 4 eine vierte exemplarische Ausführungsform eines Systems zum Testen eines Fahrzeugumfeldsensors und zum Einstellen wenigstens eines Fahrzeugscheinwerfers eines Kraftfahrzeugs,
- Figur 5 eine nicht vom Schutzumfang umfasste Ausführungsform eines Systems zum Testen eines Fahrzeugumfeldsensors und zum Einstellen wenigstens eines Fahrzeugscheinwerfers eines Kraftfahrzeugs, und
- Figur 6 eine nicht vom Schutzumfang umfasste Ausführungsform eines Systems zum Testen eines Fahrzeugumfeldsensors und zum Einstellen wenigstens eines Fahrzeugscheinwerfers eines Kraftfahrzeugs.

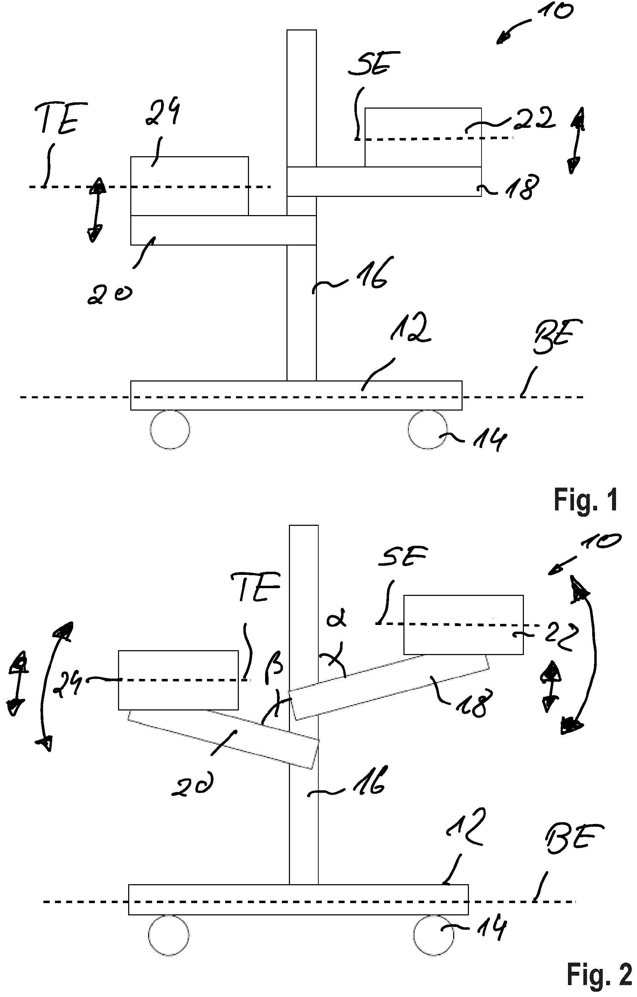

In Figur 1 ist System 10 zum Testen eines Fahrzeugumfeldsensors und zum Einstellen wenigstens eines Fahrzeugscheinwerfers eines Kraftfahrzeugs gezeigt.

Das System 10 weist eine Basis 12 auf, die eine horizontale Basisebene BE definiert. An der Basis 12 sind in der gezeigten Ausführungsform mehrere Rollen 14 vorgesehen, sodass die Basis 12 verfahrbar ist.

Von der Basis 12 ausgehend erstreckt sich zudem eine Säule 16 in vertikaler Richtung. Die Säule 16 ist vorzugweise zentral in Bezug auf die Basis 12 angeordnet.

Darüber hinaus umfasst das System 10 in der gezeigten Ausführungsform einen ersten Träger 18 und einen zweiten Träger 20.

Der erste Träger 18 trägt ein Scheinwerfereinstellgerät 22, das zum Einstellen von wenigstens einem Fahrzeugscheinwerfer eingerichtet ist.

Der zweite Träger 20 trägt ein Testgerät 24, das zum Testen eines Fahrzeugumfeldsensors eingerichtet ist.

In der gezeigten Ausführungsform sind die Träger 18, 20 an unterschiedlichen vertikalen Positionen mit der Säule 16 gekoppelt, also in unterschiedlichen Höhen. Die Träger 18, 20 sind an zwei entgegengesetzten Seiten der Säule 16 angeordnet.

Zudem erstrecken sich die Träger 18, 20 in der gezeigten Ausführungsform in horizontaler Richtung. Mit anderen Worten stehen beide Träger 18, 20 senkrecht von der vertikal verlaufenden Säule 16 ab.

Da beide Träger 18, 20 an unterschiedlichen vertikalen Positionen mit der Säule 16 gekoppelt sind, ist das Scheinwerfereinstellgerät 22 in einer Scheinwerfereinstellgerät-Ebene SE angeordnet, die parallel zur Basisebene BE ist, wohingegen das Testgerät 24 in einer Testgerät-Ebene TE angeordnet ist, die ebenfalls parallel zur Basisebene BE, aber unterschiedlich zur Scheinwerfereinstellgerät-Ebene SE ist. Mit anderen Worten sind das Scheinwerfereinstellgerät 22 und das Testgerät 24 also in unterschiedlichen Ebenen angeordnet.

Wie durch die Pfeile angedeutet können beide Träger 18, 20 relativ zur Säule 16 verstellbar sein, wodurch das Scheinwerfereinstellgerät 22 und das Testgerät 24 in unterschiedliche Höhen gebracht werden kann.

In Figur 2 ist eine alternative Ausführungsform gezeigt, wobei nachfolgend nur auf die Unterschiede zur ersten Ausführungsform eingegangen wird.

In der in Figur 2 gezeigten Ausführungsform erstrecken sich die beiden Träger 18, 20 in geneigter Richtung von der Säule 16, also nicht mehr im Wesentlichen horizontal. Mit anderen Worten stehen beide Träger 18, 20 unter einem von 90° unterschiedlichen Winkel α, β von der Säule 16 ab, insbesondere schließen die Träger 18, 20 jeweils einen Winkel α, β zwischen 10° und 80° zwischen sich und der Säule 16 ein.

Die beiden Träger 18, 20 sind, wie auch schon in der ersten Ausführungsform gezeigt, an unterschiedlichen vertikalen Positionen mit der Säule 16 gekoppelt. Zudem sind beide Träger 18, 20 im Wesentlichen gleich lang ausgebildet und stehen unter einem im Wesentlichen gleichen Winkel α, β von der Säule 16 ab, wodurch sichergestellt ist, dass das Scheinwerfereinstellgerät 22 und das Testgerät 24 in unterschiedlichen Ebenen angeordnet sind, also in der Scheinwerfereinstellgerät-Ebene SE und der Testgerät-Ebene TE.

Es kann auch vorgesehen sein, dass beide Träger 18, 20 an der gleichen vertikalen Position mit der Säule 16 gekoppelt sind, wobei die Träger 18, 20 unterschiedlich lang und/oder unter einem unterschiedlichen Winkel α, β von der Säule 16 abstehen, wodurch weiterhin gewährleistet ist, dass das Scheinwerfereinstellgerät 22 und das Testgerät 24 in unterschiedlichen Ebenen angeordnet sind, also in der Scheinwerfereinstellgerät-Ebene SE und der Testgerät-Ebene TE.

Grundsätzlich ist auch eine Kombination der ersten Ausführungsform und der zweiten Ausführungsform denkbar, bei der einer der beiden Träger 18, 20 horizontal verläuft und der andere der beiden Träger 18, 20 in geneigter Richtung von der Säule 16 absteht.

Bei den geneigten Trägern 18, 20 kann zudem vorgesehen sein, dass der Winkel α, β, der zwischen dem jeweiligen Träger 18, 20 und der Säule 16 eingeschlossen ist, variabel ist, wie dies durch die gebogenen Pfeile in Figur 2 angedeutet ist.

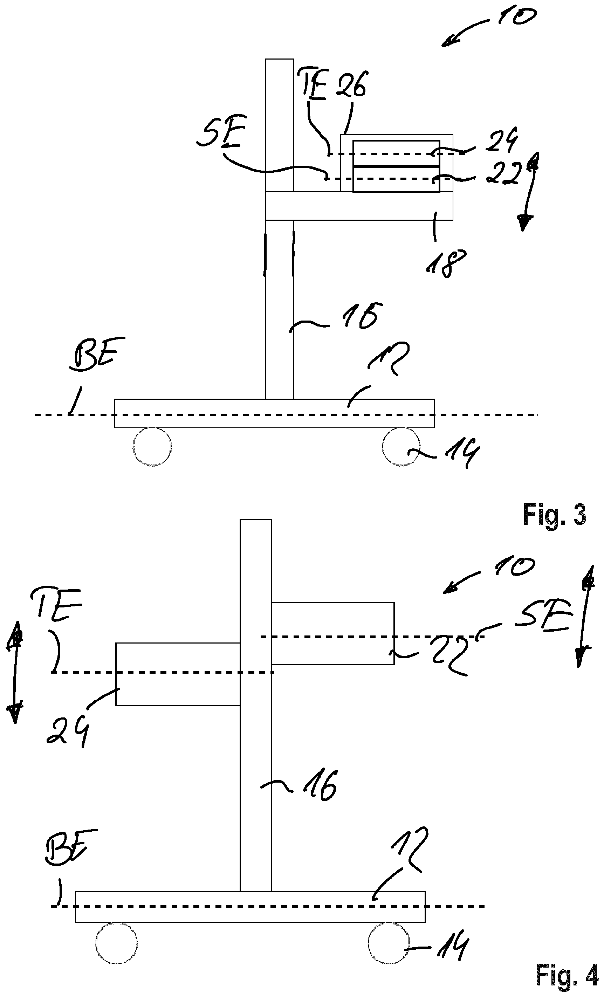

In Figur 3 ist eine dritte Ausführungsform gezeigt, bei der nur ein Träger 18 vorgesehen ist, an dem das Scheinwerfereinstellgerät 22 und das Testgerät 24 angeordnet sind.

Das Scheinwerfereinstellgerät 22 und das Testgerät 24 sind übereinander gestapelt, weshalb das Scheinwerfereinstellgerät 22 und das Testgerät 24 weiterhin in unterschiedlichen Ebenen angeordnet sind, nämlich in der Scheinwerfereinstellgerät-Ebene SE und der Testgerät-Ebene TE.

Beispielsweise können das Scheinwerfereinstellgerät 22 und das Testgerät 24 in einem gemeinsamen Gehäuse 26 untergebracht sein. Anders ausgedrückt sind das Scheinwerfereinstellgerät 22 und das Testgerät 24 im gemeinsamen Gehäuse 26 angeordnet.

Auch hier können das Scheinwerfereinstellgerät 22 und das Testgerät 24 gemeinsam entlang der Säule 16 mittel des Trägers 18 verschoben, also in der Höhe verstellt werden, sofern dies gewünscht ist. Da das Scheinwerfereinstellgerät 22 und das Testgerät 24 übereinander gestapelt sind, ist hierbei sichergestellt, dass das Scheinwerfereinstellgerät 22 und das Testgerät 24 stets in unterschiedlichen Ebenen angeordnet sind, die parallel zur Basisebene BE sind.

Es kann aber auch vorgesehen sein, dass das Scheinwerfereinstellgerät 22 und das Testgerät 24, sofern diese im gemeinsamen Gehäuse 26 angeordnet sind, horizontal nebeneinander angeordnet sind, also nicht übereinander gestapelt, sondern nebeneinander angeordnet sind. Anders ausgedrückt ist die Baugruppe, die das Scheinwerfereinstellgerät 22 und das Testgerät 24 umfasst, dann um 90° gedreht, wobei dies die Betriebsorientierung des Scheinwerfereinstellgeräts 22 und des Testgeräts 24 entspricht.

In Figur 4 ist eine vierte Ausführungsform gezeigt, bei der das Scheinwerfereinstellgerät 22 und das Testgerät 24 direkt mit der Säule 16 gekoppelt sind, also ohne Träger.

Vorliegend weisen das Scheinwerfereinstellgerät 22 und das Testgerät 24 jeweils eine Koppelschnittstelle an einer ihren Seiten auf, über die das Scheinwerfereinstellgerät 22 und das Testgerät 24 jeweils mit der Säule 16 direkt gekoppelt sind, insbesondere an unterschiedlichen Seiten der Säule 16.

Die Koppelung des Scheinwerfereinstellgeräts 22 und des Testgeräts 24 kann dabei derart ausgebildet sein, dass das Scheinwerfereinstellgerät 22 und das Testgerät 24 verschiebbar in Bezug auf die Säule 16 sind, wie dies durch die Pfeile angedeutet ist.

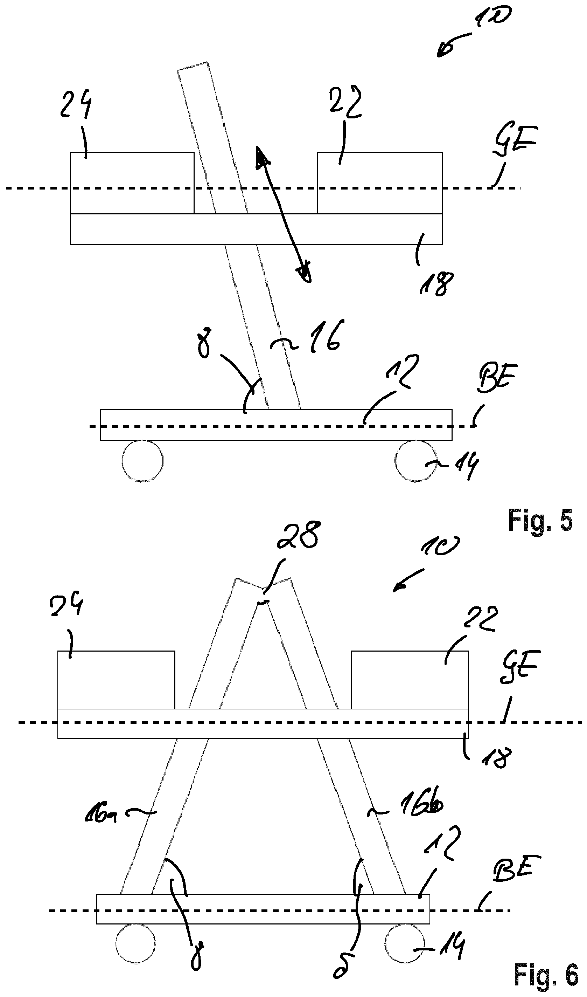

In Figur 5 ist eine fünfte, nicht vom Schutzumfang umfasste Ausführungsform gezeigt, bei der sich die Säule 16 von der Basis 12 ausgehend unter einem Winkel γ zwischen 15° und 75° erstreckt.

An der Säule 16 ist ein gemeinsamer Träger 18 vorgesehen, der horizontal verlaufend ist, wobei das Scheinwerfereinstellgerät 22 und das Testgerät 24 über den gemeinsamen Träger 18 indirekt mit der Säule 16 gekoppelt sind. Das Scheinwerfereinstellgerät 22 und das Testgerät 24 sind somit in einer gemeinsamen Geräteebene GE angeordnet, die parallel zur Basisebene BE ist.

Der Träger 18 kann verschiebbar an der Säule 16 angeordnet sein, wie dies durch den Pfeil symbolisiert ist, sodass das Scheinwerfereinstellgerät 22 und das Testgerät 24 verstellt werden können, also in unterschiedlichen Höhen positioniert werden können. Diese Ausführungsform eignet sich insbesondere für unterschiedlich schwere Geräte, also wenn das Scheinwerfereinstellgerät 22 bspw. leichter als das Testgerät 24 ist.

Das Scheinwerfereinstellgerät 22 und das Testgerät 24 könnten, anders als in Figur 5 dargestellt, in einem gemeinsamen Gehäuse 26 angeordnet sein, also auf dem Träger 18, aber auf einer gemeinsamen Seite in Bezug auf die Säule 16.

In Figur 6 ist eine sechste, nicht vom Schutzumfang umfasste Ausführungsform gezeigt, bei der zwei Säulen 16a, 16b vorgesehen sind, die sich von der Basis 12 ausgehend unter einem Winkel γ, δ zwischen 15° und 75° erstrecken. Die beiden Säulen 16a, 16b sind miteinander verbunden und bilden einen Tragrahmen 28 aus. Wie in Figur 6 gezeigt, sind die beiden Säulen 16a, 16b an ihrem von der Basis 12 wegweisenden Ende miteinander verbunden.

Das Scheinwerfereinstellgerät 22 und das Testgerät 24 sind beide über den horizontal verlaufenden Träger 18 mit den Säulen 16a, 16b verbunden. Anders ausgedrückt ist der horizontal verlaufende Träger 18 ein Teil des Tragrahmens 28.

Das Scheinwerfereinstellgerät 22 und das Testgerät 24 könnten, anders als in Figur 6 dargestellt, in einem gemeinsamen Gehäuse 26 angeordnet sein, also auf dem Träger 18.

Grundsätzlich kann das Testgerät 24 ein Radar-Testgerät und/oder ein Lidar-Testgerät aufweisen. Das Testgerät 24 kann also zwei Testmodule umfassen oder es sind zwei unterschiedliche Testgeräte 24 vorgesehen, die für das Testen eines Radar-Sensors bzw. eines Lidar-Sensors des Kraftfahrzeugs vorgesehen sind.

Generell kann das Testgerät 24 eingerichtet sein, den Fahrzeugumfeldsensor zu kalibrieren. Insofern wird der Fahrzeugumfeldsensor nicht nur getestet, sondern auch kalibriert.

Sofern komplexere Tests vorgesehen sind, kann die Basis 12 auch mit einem Roboterarm verbunden sein, über den die Basis 12 und somit das Scheinwerfereinstellgerät 22 und das Testgerät 24 verstellt werden. In dem Fall können die Rollen 14 unter anderem entfallen, da die entsprechende Bewegung über den Roboterarm erfolgt.

Mit dem System 10, was in den Figuren 1 bis 6 gezeigt ist, kann ein Verfahren zum Testen eines Fahrzeugumfeldsensors und zum Einstellen wenigstens eines Fahrzeugscheinwerfers eines Kraftfahrzeugs durchgeführt werden. Hierzu wird ein derartiges System 10 bereitgestellt und in Bezug auf das Kraftfahrzeug positioniert. Das Testgerät 24 wird verwendet, um den Fahrzeugumfeldsensor des Kraftfahrzeugs zu testen. Zudem wird das Scheinwerfereinstellgerät 22 verwendet, um wenigstens einen Fahrzeugscheinwerfer des Kraftfahrzeugs einzustellen.

## Patentansprüche

1. System (10) zum Testen eines Fahrzeugumfeldsensors und zum Einstellen wenigstens eines Fahrzeugscheinwerfers eines Kraftfahrzeugs, wobei das System (10) eine Basis (12), wenigstens ein Scheinwerfereinstellgerät (22) und wenigstens ein Testgerät (24) umfasst, wobei die Basis (12) eine horizontale Basisebene (BE) definiert, wobei das wenigstens eine Scheinwerfereinstellgerät (22) eingerichtet ist, wenigstens einen Fahrzeugscheinwerfer einzustellen, und wobei das wenigstens eine Testgerät (24) eingerichtet ist, einen Fahrzeugumfeldsensor zu testen, **dadurch gekennzeichnet, dass** das wenigstens eine Scheinwerfereinstellgerät (22) in einer Scheinwerfereinstellgerät-Ebene (SE) angeordnet ist, die parallel zur Basisebene (BE) ist, und das wenigstens eine Testgerät (24) in einer Testgerät-Ebene (TE) angeordnet ist, die parallel zur Basisebene (BE), aber unterschiedlich zur Scheinwerfereinstellgerät-Ebene (SE) ist, und/oder dass das wenigstens eine Scheinwerfereinstellgerät (22) und das wenigstens eine Testgerät (24) in einem gemeinsamen Gehäuse (26) angeordnet sind.

2. System (10) nach Anspruch 1, **dadurch gekennzeichnet, dass** sich eine Säule (16) von der Basis (12) ausgehend in vertikaler Richtung erstreckt, wobei mit der Säule (16) ein erster Träger (18) für das wenigstens eine Scheinwerfereinstellgerät (22) gekoppelt ist, und wobei mit der Säule (16) ein zweiter Träger (20) für das wenigstens eine Testgerät (24) gekoppelt ist.

3. System nach Anspruch 2, **dadurch gekennzeichnet, dass** der erste Träger (18) und der zweite Träger (20) an zwei entgegengesetzten Seiten der Säule (16) angeordnet sind.

4. System nach Anspruch 2 oder 3, **dadurch gekennzeichnet, dass** der erste Träger (18) und/oder der zweite Träger (20) verschiebbar in Bezug auf die Säule (16) mit der Säule (16) gekoppelt sind bzw. ist.

5. System (10) nach einem der Ansprüche 2 bis 4, **dadurch gekennzeichnet, dass** sich der erste Träger (18) und/oder der zweite Träger (20) in horizontaler Richtung erstrecken bzw. erstreckt.

6. System (10) nach einem der Ansprüche 2 bis 5, **dadurch gekennzeichnet, dass** der erste Träger (18) und/oder der zweite Träger (20) unter einem von 90° unterschiedlichen Winkel von der Säule (16) abstehen bzw. absteht, insbesondere wobei der erste Träger (18) und/oder der zweite Träger (20) einen Winkel zwischen 10° und 80° zwischen sich und der Säule (16) einschließen bzw. einschließt.

7. System (10) nach Anspruch 1, **dadurch gekennzeichnet, dass** das wenigstens eine Scheinwerfereinstellgerät (22) und das wenigstens eine Testgerät (24) übereinander gestapelt sind.

8. System (10) nach Anspruch 1, **dadurch gekennzeichnet, dass** sich eine Säule (16) von der Basis (12) ausgehend in vertikaler Richtung erstreckt, wobei das wenigstens eine Scheinwerfereinstellgerät (22) und/oder das wenigstens eine Testgerät (24) direkt mit der Säule (16) gekoppelt sind bzw. ist, insbesondere wobei das wenigstens eine Scheinwerfereinstellgerät (22) und/oder das wenigstens eine Testgerät (24) verschiebbar mit der Säule (16) gekoppelt sind.

9. System (10) nach Anspruch 1 oder 7, **dadurch gekennzeichnet, dass** sich eine Säule (18, 20) von der Basis (16) ausgehend unter einem Winkel zwischen 15° und 75° erstreckt, wobei das wenigstens eine Scheinwerfereinstellgerät (22) und das wenigstens eine Testgerät (24) beide zumindest indirekt mit der Säule (16) gekoppelt sind.

10. System (10) nach Anspruch 9, **dadurch gekennzeichnet, dass** sich zwei Säulen (18, 20) von der Basis (16) ausgehend unter einem Winkel zwischen 15° und 75° erstrecken, wobei die beiden Säulen (18, 20) miteinander verbunden sind, um einen Tragrahmen (28) auszubilden, insbesondere wobei die beiden Säulen (18, 20) an ihrem von der Basis (12) wegweisenden Ende miteinander verbunden sind.

11. System (10) nach Anspruch 1, 7, 9 oder 10, **dadurch gekennzeichnet, dass** das wenigstens eine Scheinwerfereinstellgerät (22) und das wenigstens eine Testgerät (24) beide über einen horizontal verlaufenden Träger (18) mit der Säule (16) verbunden sind und/oder dass das wenigstens eine Scheinwerfereinstellgerät (22) und das wenigstens eine Testgerät (24) beide in einer gemeinsamen Geräteebene (GE) angeordnet sind, die parallel zur Basisebene (BE) ist.

12. System (10) nach einem der vorhergehenden Ansprüche, **dadurch gekennzeichnet, dass** an der Basis (16) mehrere Rollen (14) vorgesehen sind oder dass wenigstens ein Roboterarm vorgesehen ist, wobei der Roboterarm mit der Basis (16) gekoppelt ist.

13. System (10) nach einem der vorhergehenden Ansprüche, **dadurch gekennzeichnet, dass** das wenigstens eine Testgerät (24) ein Radar-Testgerät und/oder ein Lidar-Testgerät aufweist.

14. System (10) nach einem der vorhergehenden Ansprüche, **dadurch gekennzeichnet, dass** das wenigstens eine Testgerät (24) eingerichtet ist, den Fahrzeugumfeldsensor zu kalibrieren.

15. Verfahren zum Testen eines Fahrzeugumfeldsensors und zum Einstellen wenigstens eines Fahrzeugscheinwerfers eines Kraftfahrzeugs, wobei das Verfahren die Schritte umfasst:
- Bereitstellen eines Systems (10) nach einem der vorhergehenden Ansprüche,
- Positionieren des Systems (10) in Bezug auf das Kraftfahrzeug,
- Verwenden des wenigstens einen Testgeräts (24), um den Fahrzeugumfeldsensor des Kraftfahrzeugs zu testen, und
- Verwenden des wenigstens einen Scheinwerfereinstellgeräts (22), um den wenigstens einen Fahrzeugscheinwerfer des Kraftfahrzeugs einzustellen.
